# EUROPÄISCHE PATENTSCHRIFT

(11) **EP 3 219 781 B1**
(45) Veröffentlichungstag und Bekanntmachung des Hinweises auf die Patenterteilung: **10.04.2019**
(21) Anmeldenummer: 17161285.6
(22) Anmeldetag: 16.03.2017
(51) Int. Cl.: C12C 11/11, B67D 1/08, C12C 3/08, C12C 13/10

(54) **VERFAHREN ZUR REPRODUZIERBAREN AROMATISIERUNG VON EINZELNEN GENUSSEINHEITEN VON BIER IN EINER BIERZAPFANLAGE**
METHOD FOR THE REPRODUCIBLE THE AROMATISATION OF INDIVIDUAL UNITS OF BEER IN A BEER DISPENSER
PROCÉDÉ D'AROMATISATION REPRODUCTIBLE D'UNITÉS DE CONSOMMATION INDIVIDUELLES DE BIÈRE DANS UNE TIREUSE À BIÈRE

(30) Priorität: 16.03.2016 DE 102016104923
(43) Veröffentlichungstag der Anmeldung: 20.09.2017
(73) Patentinhaber: Winkelmann, Erik, 01099 Dresden (DE); Bauerfeind, Georg, 01097 Dresden (DE); Winkelmann, André, 01097 Dresden (DE); Rudolf, Christian, 01099 Dresden (DE); Rietschel, Simon, 01099 Dresden (DE)
(72) Erfinder: Winkelmann, Erik, 01099 Dresden (DE); Schmidt, Dieter, 18057 Rostock (DE); Winkelmann, André, 01097 Dresden (DE); Rietschel, Simon, 01099 Dresden (DE); Bauerfeind, Georg, 01097 Dresden (DE); Rudolf, Christian, 01099 Dresden (DE)
(74) Vertreter: Sperling, Thomas

(56) Entgegenhaltungen:
- WO-A1-2008/140331
- WO-A1-2015/164166
- WO-A2-2017/068358
- DE-A1-102013 022 271
- DE-B3-102015 101 518

## Beschreibung

Die Erfindung betrifft ein Verfahren zur reproduzierbaren Aromatisierung von einzelnen Genusseinheiten von Bier in einer Bierzapfanlage. Des Weiteren betrifft die Erfindung eine Bierzapfanlage, die zur Durchführung des erfindungsgemäßen Verfahrens geeignet ist.

Das Prinzip des Herauslösens von Aromaölen aus Hopfen durch den in Bier enthaltenen oder entstehenden Alkohol während oder nach dem Gärprozess wird gemein als Kalthopfung oder engl. Dryhopping bezeichnet. Diese Technik wurde in den USA entwickelt und hat auch in Europa Einzug gehalten. Bei dieser Technik werden meist ganze Gärtanks mit einem Volumen von mehreren Hektolitern mit Aromahopfen befüllt und durch den im Bier befindlichen Alkohol extrahiert. Dieser Prozess dauert in der Regel Tage bis Wochen.

Aus der DE 10 2012 110 830A1 ist ein Verfahren zur Extraktion von Aromastoffen aus festen pflanzlichen Aromaträgern in einer Brauflüssigkeit, insbesondere in Bier bekannt, wobei ein Vorrat der Aromaträger in einem Prozessbehälter aufgenommen ist und von der Brauflüssigkeit durchspült wird. Dabei durchströmt die Brauflüssigkeit den Prozessbehälter mit dem Vorrat der Aromaträger in zumindest einer turbulenten Wirbelströmung. Dieses Verfahren ist insbesondere zur Extraktion von Aromastoffen aus festen Hopfenprodukten, wie beispielsweise Hopfenpellets aus gemahlenem und gepresstem Hopfen, in Bier oder Bierzwischenprodukten während der Bierherstellung geeignet. Für die Durchführung des genannten Verfahrens dient eine Vorrichtung mit einem Prozessbehälter, der einen rohrförmigen Aufnahmeraum für die Aromaträger mit einer verschließbaren Einfüllöffnung, zumindest einen Zulauf und zumindest einen Ablauf für die Brauflüssigkeit aufweist, wobei eine Siebvorrichtung zwischen dem Aufnahmeraum und dem Ablauf vorgesehen ist.

Schnellere Kalthopfungsverfahren werden mit anderen Geräten realisiert. Eine ebenfalls aus den Vereinigten Staaten bekannte Vorrichtung, ein organoeleptisches Hopfenwandler-Modul mit der Bezeichnung "Hop Randall", dient zur Batch-In-Stream-Kalthopfung von Bier während des Zapfprozesses. Bei dieser Vorrichtung wird eine verhältnismäßig große Hopfenmenge zur geschmacklichen Modifikation eines kompletten Fasses verwendet. Dies führt dazu, dass der Kunde ein mit der Randall gehopftes Bier in der selben Form nicht nochmal trinken kann, da es hierfür nötig wäre das gleiche, also beispielsweise wieder das siebente Bier einer neuen Randall-Füllung bekommen müsste. Eine Reproduzierbarkeit des Biergeschmacks ist hier also, wenn überhaupt, nur sehr eingeschränkt möglich. Darüber hinaus besitzt das Randall-Modul zwei Kammern. In der zweiten Kammer wird eine "Entschaumung" des Biers realisiert. Zudem kann beim Randall-Verfahren nur eine Hopfensorte beziehungsweise Hopfenkombination verwendet werden.

Der Stand der Technik, der momentan in den Brauereien angewandt wird, zielt auf eine maximale Ausbeute der Aromaöle ab. Deshalb wird die Kalthopfung in der Regel über längere Zeiträume, das heißt tagelang oder gar wochenlang durchgeführt. Dabei werden neben den Aromen auch Bitterstoffe ausgelöst, die zum Beispiel beim "Indian Pale Ale" für einen sehr hohen IBU-Wert (International Bitterness Unit), der ein international bekanntes Vergleichsmaß für den Gehalt an Bitterstoffen ist, sorgen. Eine schnelle Kalthopfung wurde weder angewandt noch wissenschaftlich untersucht. Um verschiedene Geschmäcker anbieten zu können, werden entsprechend viele Zapfhähne, inklusive Kühlung und Leitung, benötigt. Jedes Getränk muss entsprechend vorgehalten werden, was zu hohen Lager- und Logistikkosten führt.

Die WO 2015/164166 A1 beschreibt ein Verfahren zum Aromatisieren einer Flüssigkeit, umfassend die Verfahrensschritte:
- Platzieren eines Aromatisierungsmaterials in einem befüllbaren Behälter;
- Übertragen der Flüssigkeit in den befüllbaren Behälter, wobei die Flüssigkeit in dem befüllbaren Behälter aromatisiert wird, indem die Flüssigkeit mit dem Aromatisierungsmaterial in Kontakt gebracht wird;
- Steuern der Temperatur der Flüssigkeit in dem befüllbaren Behälter, wenn die Flüssigkeit infundiert wird; und
- Abgeben der Flüssigkeit aus dem befüllbaren Behälter, nachdem die Flüssigkeit aromatisiert worden ist.

Die Aufgabe der Erfindung besteht darin, kleinere Mengen von Bier, die den üblichen Genusseinheiten entsprechen, innerhalb eines - im Vergleich zu bisher bekannten Kalthopfungsverfahren - kurzen Zeitraums möglichst reproduzierbar zu aromatisieren.

Die Aufgabe wird durch ein Verfahren mit den Merkmalen gemäß Patentanspruch 1, eine Vorrichtung nach dem unabhängigen Anspruch 8 sowie eine Bierzapfanlage nach dem unabhängigen Anspruch 14 gelöst. Weiterbildungen sind in den abhängigen Patentansprüchen angegeben.

Die Lösung der Aufgabe der Erfindung besteht in einem Verfahren zur reproduzierbaren Aromatisierung von einzelnen Genusseinheiten von Bier in einer Bierzapfanlage, bei dem
a) ein mit einer auf die Menge einer oder mehrerer Genusseinheiten abgestimmten Menge an festem Aromaträger gefüllter und mit Bier durchströmbarer Behälter in eine in der Bierzapfanlage integrierte, mit mindestens einem Bierzulauf und Bierablauf verbundene Hopfenkammer eingesetzt wird, wobei beim Einsetzen des Behälters der Bierzulauf in die Hopfenkammer gesperrt ist,
b) der eingesetzte Behälter in der Hopfenkammer derart befestigt und nach außen hin derart abgedichtet wird, dass ein Strömungsweg des Biers, der vom Bierzulauf durch den mit dem Aromaträger gefüllten Behälter in den Bierablauf führt, bereitgestellt wird, wobei der gefüllte Behälter vor dem Einsatz einen Einlass und einen Auslass für das Durchströmen enthält oder vor dem Einsatz vollständig geschlossen vorliegt und erst beim Einsatz und dem Abdichten des Behälters in der Hopfenkammer eine Einlassöffnung und eine Auslassöffnung erzeugt werden,
c) der Bierzulauf geöffnet wird, so dass über den Bierzulauf Bier mit einem Eingangsdruck von mindestens 0,1 bar in die Hopfenkammer und somit in den mit dem Aromaträger gefüllten Behälter strömt und durch Extraktion von lipophilen Aromastoffen aus dem festen Aromaträger aromatisiert wird,
d) in einem gleichzeitigen oder dem Schritt c) nachfolgenden Zapfvorgang der Bierablauf geöffnet wird, so dass das aromatisierte Bier aus der Hopfenkammer in den Bierablauf geleitet wird, während der extrahierte feste Aromaträger zumindest zum überwiegenden Teil im Behälter verbleibt,
e) nach Abschluss eines oder mehrerer Zapfvorgänge der Behälter entfernt und die Schritte a bis d) wiederholt werden.

Vorzugsweise erfolgt das Befestigen und Abdichten des Behälters in der Hopfenkammer in Schritt b) zusammen mit einem Verschluss der Hopfenkammer. Als fester Aromaträger können Hopfenpellets aus gemahlenem und/oder gepresstem Hopfen und/oder Doldenhopfen und/oder Aromaträger mit aromaölhaltigen pflanzlichen Stoffen eingesetzt werden. Der mit festem Aromaträger gefüllte Behälter ist bevorzugt ein Röhrchen mit Sieb, eine Kapsel, eine Kartusche oder ein Filtergefäß mit Hopfenfilter, wobei in jedem dieser Behälter der feste Aromaträger beim Durchströmen mit der alkoholhaltigen wässrigen Lösung extrahiert und gleichzeitig zumindest zum überwiegenden Teil zurückgehalten wird. Insbesondere bei der Anwendung von Sieben lässt es sich nicht vermeiden, dass - abhängig von der Maschenweite des Siebs - kleinere Partikel des festen Aromaträgers nicht zurückgehalten werden können. Der gefüllte Behälter kann bereits vor dem Einsatz einen Einlass und einen Auslass für das Durchströmen enthalten. Allerdings kann der Behälter auch vor dem Einsatz zunächst vollständig geschlossen vorliegen, zum Beispiel als geschlossene Kapsel, wobei erst beim Einsatz bzw. der Befestigung und dem Abdichten des Behälters in der Hopfenkammer eine Einlassöffnung und eine Auslassöffnung erzeugt werden, zum Beispiel durch einen Stanzvorgang, der gleichzeitig mit dem Verschluss der Hopfenkammer erfolgt. Der Druck, mit dem das unaromatisierte Bier in die Hopfenkammer eintritt, wird vorteilhafterweise auf einen Wert von 0,1 bis 10 bar geregelt. Unter dem Begriff "Druck" beziehungsweise "Eingangsdruck" ist in diesem Zusammenhang stets die Druckdifferenz zwischen dem Druck innerhalb der Leitung und dem Druck außerhalb der Leitung verstanden. Besonders vorteilhaft ist ein Eingangsdruck im Bereich von 2 bis 7 bar, besonders bevorzugt ist ein Bereich von 2 bis 4 bar. Die Temperatur des unaromatisierten Biers, das in die Hopfenkammer eintritt, wird vorzugsweise so geregelt, dass sie einen Wert von 0 bis 20 °C aufweist. Besonders bevorzugt ist ein Bereich von 1 bis 10 °C.

Das erfindungsgemäße Verfahren stellt ein Kalthopfungsverfahren dar, mit dem Kleinstmengen von Bier innerhalb kürzester Zeit nach dem Prinzip einer Instream-Kalthopfung, das heißt einer kontinuierlichen Durchflusszellen-Extraktion, aromatisiert werden. Unter Instream-Kalthopfung wird ein Verfahren verstanden, bei dem das Extraktionsmittel, in diesem Fall Bier, kontinuierlich das Extraktgut, in diesem Fall Hopfen, durchströmt und somit das Extrakt auslöst und mit sich führt. Hierbei bestimmt die Durchströmzeit die Kontaktzeit des Extraktionsmittels mit dem Extraktgut und somit die Extraktausbeute. Die Ausbeute ist somit über den Volumenstrom genau einstellbar und reproduzierbar. Das erfindungsgemäße Verfahren bietet somit einen Vorteil gegenüber solchen bisher bekannten Verfahren, bei denen eine Kombination aus kontinuierlicher und diskontinuierlicher Extraktion zur Anwendung kommt und, zum Beispiel nach einem Zapfvorgang, das Extraktgut (Hopfen) in einer Flüssigkeitssäule (Bier) auf unbestimmte Zeit, in diesem Falle bis zum nächsten Zapfvorgang, verweilt. Mit dem erfindungsgemäßen Verfahren wird der Nachteil dieser bekannten Verfahren hinsichtlich eines nicht reproduzierbaren Geschmacksprofils vermieden, welches daraus resultiert, dass insbesondere dann, wenn der erneute Zapfvorgang erst nach einem längeren Zeitraum erfolgt, zunächst die in dem Behälter stehende, diskontinuierlich extrahierte Menge eingeschenkt werden muss, bevor eine kontinuierliche Extraktion einsetzen kann.

Gemäß einer besonders bevorzugten Ausführungsform der Erfindung ist die Menge an Aromaträger in einem eingesetzten Behälter vorgesehen, die für die Aromatisierung einer Genusseinheit im Bereich von 0,1 - 3 Liter berechnet ist, beispielsweise der häufig ausgeschenkten Genusseinheit von 0,5 Liter.

Des Weiteren betrifft die Erfindung eine Bierzapfanlage für die Durchführung des oben genannten Verfahrens zur reproduzierbaren Aromatisierung von einzelnen Genusseinheiten von Bier, die einen Strömungsweg des Biers von einem Bierfass bis zu einer Bierablauföffnung bereitstellt, umfassend
- eine erste Absperreinrichtung für das Öffnen und Unterbrechen des Strömungsweges des Biers aus einem ersten Leitungsabschnitt einer Bierleitung,
- eine durchströmbare Hopfenkammer, die über einen Bierzulauf mit der ersten Absperreinrichtung verbunden ist und eine Austrittsöffnung aufweist, die zu einer Bierablaufleitung führt,
- eine zweite Absperreinrichtung für das Öffnen und Unterbrechen des Strömungsweges des Biers durch die Bierablaufleitung,
- mindestens einen mit einer auf die Menge einer oder mehrerer Genusseinheiten abgestimmten Menge an festem Aromaträger befüllbaren, mit Bier durchströmbaren und den festen Aromaträger dabei gleichzeitig zumindest zum überwiegenden Teil zurückhaltenden Behälter, der in die Hopfenkammer derart einsetzbar und nach außen abdichtbar ist, dass der Strömungsweg des Biers beim Aromatisierungsvorgang durch den Behälter und beim Zapfvorgang aus dem Behälter in die Bierablaufleitung führt, wobei der Behälter derart ausgebildet ist, dass er vor dem Einsatz einen Einlass und einen Auslass für das Durchströmen enthält oder vor dem Einsatz vollständig geschlossen vorliegt und erst beim Einsatz und dem Abdichten des Behälters in der Hopfenkammer eine Einlassöffnung und eine Auslassöffnung erzeugt werden.

In der der Hopfenkammer bezüglich der Strömungsrichtung des Biers vorgeschalteten, ersten Absperreinrichtung kann eine Absperrarmatur und/oder ein Bedienelement und/oder ein Zapfmechanismus enthalten sein.

Nach einer besonders vorteilhaften Ausgestaltung der Erfindung sind die erste Absperreinrichtung, die Hopfenkammer, ein der Hopfenkammer bezüglich des Strömungsweges des Biers nachgeschalteter Kompensator zur Regelung des Drucks des Biers nach dem Verlassen der Hopfenkammer sowie ein dem Kompensator nachgeschalteter Zapfhahn entweder als einzelne Bauteile oder zusammen in einer Aromatisierungseinheit angeordnet. Die erste Absperreinrichtung ist gemäß einer Ausführungsform der Erfindung ein der Hopfenkammer bezüglich des Strömungsweges des Biers vorgeschaltetes Ventil, während der Hopfenkammer eine zweite Absperreinrichtung nachgeschaltet ist, die einen Zapfhahnmechanismus mit einem Zapfhahn als Bedienelement umfasst und zwischen der Hopfenkammer und der Bierablauföffnung angeordnet ist. Gemäß einer Ausgestaltung dieser Ausführungsform ist dabei eine direkte Koppelung zwischen dem Zapfhahn und dem vorgeschalteten Ventil ausgebildet, die dafür sorgt, dass sich auch das Ventil öffnet, wenn der Zapfhahn geöffnet ist und das Bier somit durch die Hopfenkammer strömen kann.

Das zentrale Prinzip der erfindungsgemäßen Vorrichtung ist das Einbringen eines mit Aromahopfen befüllten Behältnisses als auswechselbarer Einsatz, zum Beispiel einer Kapsel, einem Röhrchen, einem Filtergefäß oder einer Kartusche, in eine in eine Bierzapfanlage integrierte Hopfenkammer beziehungsweise Aromatisierungseinheit. Eine Aromatisierungseinheit kann zum Beispiel in Form eines konstruktiv veränderten Zapfhahns in eine Bierzapfanlage integriert sein. Beim Durchlauf des Biers durch die Aromatisierungseinheit beziehungsweise Hopfenkammer werden durch den im Bier befindlichen Alkohol die lipophilen Geschmacksstoffe aus dem Aromahopfen extrahiert und ausgetragen. Das fertig gezapfte Bier enthält dann das Aroma des jeweiligen Hopfens. Aufgrund der auf die Biermenge abgestimmten Hopfenmenge ist es möglich, diesen Geschmack immer wieder zu reproduzieren. Die Aromatisierungseinheit kann so ein Fluidvolumen (Bier) im Bereich von 0,1 - 3 Liter reproduzierbar mit dem gleichen geschmacklichen Ergebnis aromatisieren. Vorteilhafterweise unterscheidet sich die Zapfdauer eines mittels Aromatisierungseinheit aromatisierten Biers nicht wesentlich von der Zapfdauer eines normalen Biers.

Da mit der erfindungsgemäßen Vorrichtung jedes Bier einzeln kaltgehopft werden kann, kann hier jeder erzeugte Biergeschmack auch beim nächsten Bier wieder erzeugt werden.

Die Ausschäumung beim Austritt des Biers wird - wie beim konventionellen Zapfen - vorzugsweise mit Hilfe eines Kompensators verhindert. Eine konstruktiv nicht vermiedene Aufschäumung ist auch die zeitlich limitierende Größe beim Zapfen mit der aus dem Stand der Technik bekannten Randall-Anlage, da auch dort gewartet werden muss, bis sich der Schaum in der zweiten Kammer der Randall-Anlage setzt. Dieser Prozess kann einige Minuten dauern. Wichtig ist bei der erfindungsgemäßen Vorrichtung außerdem der Wechselmechanismus, der gewährleistet, dass die unter Druck stehende Bierzuleitung vom Volumen, in dem sich der Hopfen befindet, physisch entkoppelt werden kann. Erst dieser Mechanismus ermöglicht die Batch-In-Stream-Kalthopfung einer einzelnen Biereinheit.

Während zum Beispiel beim aus dem Stand der Technik bekannten Randall-Verfahren nur eine Hopfensorte beziehungsweise Hopfenkombination verwendet werden kann, ist es mit der erfindungsgemäßen Vorrichtung möglich, ein ganzes Spektrum an Geschmäckern zu erzeugen und diverse Hopfensorten zu verwenden.

Es ist eine - verglichen mit bisher bekannten Kalthopfungsverfahren - besonders schnelle Kalthopfung möglich, da der Wechsel des Hopfenbehältnisses in sehr kurzer Zeit durchgeführt werden kann. Durch den einfachen und schnellen Austausch der Hopfenbehältnisse kann zudem die genannte Vielfalt an Geschmäckern bei gleichzeitig reduzierten Transport-/Lager- und Logistikkosten erzeugt werden.

Ein weiterer Vorteil besteht darin, dass sich die erfindungswesentlichen Hopfenkammern beziehungsweise Aromatisierungseinheiten leicht in vorhandene Zapfanlagen integrieren lassen. Es können somit reproduzierbare Aromatisierungsergebnisse erreicht werden, wobei keine beziehungsweise eine sehr geringe Auslösung von Bitterstoffen erfolgt. Vorzugsweise ist die Vorrichtung derart ausgebildet, dass sie anstelle eines Zapfhahns von bestehenden Bierzapfanlagen in die Bierzapfanlagen einsetzbar ist.

Ein weiterer Aspekt der Erfindung betrifft eine Bierzapfanlage, die eine oben beschriebene, erfindungsgemäße Vorrichtung umfasst und die einen Strömungsweg des Biers von einem Bierfass bis zu einer Bierablauföffnung bereitstellt. Eine solche Bierzapfanlage umfasst
- eine erste Einheit zum Anschließen und Kühlen eines Bierfasses,
- einen ersten Leitungsabschnitt der Bierleitung, der an einem ersten Ende mit einem Bierfass verbindbar ausgebildet ist,
- eine erste Absperreinrichtung für das Öffnen und Unterbrechen des Strömungsweges des Biers aus dem ersten Leitungsabschnitt der Bierleitung,
- eine Speichereinheit zur Aufnahme eines mit dem Bierfass verbindbaren Gasbehälters für die Herstellung eines Betriebsdrucks der Bierzapfanlage,
- eine durchströmbare Hopfenkammer, die über einen Bierzulauf mit der ersten Absperreinrichtung verbunden ist und eine Austrittsöffnung aufweist, die zu einer Bierablaufleitung führt,
- eine zweite Absperreinrichtung für das Öffnen und Unterbrechen des Strömungsweges des Biers durch die Bierablaufleitung,
- mindestens einen mit einer auf die Menge einer oder mehrerer Genusseinheiten abgestimmten Menge an festem Aromaträger befüllbaren, mit Bier durchströmbaren und den festen Aromaträger dabei gleichzeitig zumindest zum überwiegenden Teil zurückhaltenden Behälter, der in die Hopfenkammer derart einsetzbar und nach außen abdichtbar ist, dass der Strömungsweg des Biers beim Aromatisierungsvorgang durch den Behälter und beim Zapfvorgang aus dem Behälter in die Bierablaufleitung führt.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Figur 1:**: eine schematische Darstellung einer In-Stream-Kalthopfungsvorrichtung nach einer ersten Ausführungsform,
- **Figur 2:**: eine schematische Darstellung einer In-Stream-Kalthopfungsvorrichtung nach einer zweiten Ausführungsform,
- **Figur 3a:**: eine schematische Ansicht einer Hopfenkammer im geschlossenen Zustand,
- **Figur 3b:**: eine schematische Ansicht einer Hopfenkammer im geöffneten Zustand,
- **Figur 4:**: das In-Stream-Kalthopfungsverfahren als Fließschema,
- **Figur 5:**: eine detaillierte Längsschnittdarstellung einer Aromatisierungseinheit,
- **Figur 6:**: eine perspektivische Darstellung der Aromatisierungseinheit vor Einsatz eines Filtergefäßes,
- **Figur 7:**: eine perspektivische Darstellung der Aromatisierungseinheit mit eingesetztem Filtergefäß,
- **Figur 8:**: eine perspektivische Darstellung der Aromatisierungseinheit mit einem frisch eingeführten Magazin von mehreren Behältern,
- **Figur 9:**: eine perspektivische Darstellung der Aromatisierungseinheit mit Magazin nach Verbrauch mehrerer Behälter,
- **Figur 10:**: eine perspektivische Darstellung der Aromatisierungseinheit vor Einsatz einer Kartusche und
- **Figur 11:**: eine perspektivische Darstellung der Aromatisierungseinheit mit eingesetzter Kartusche.

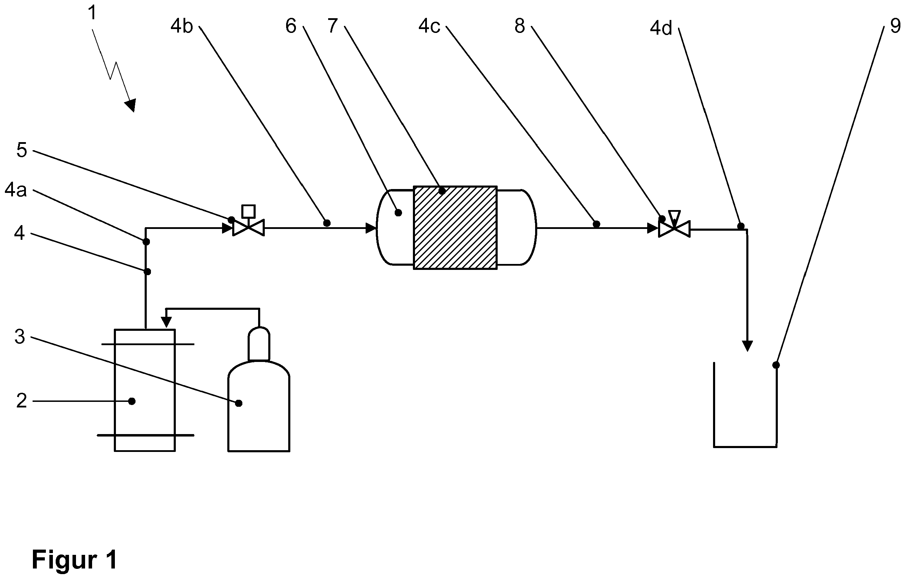

Die **Figur 1** zeigt eine schematische Darstellung einer Instream-Kalthopfungsvorrichtung in einer Bierzapfanlage 1 nach einer ersten Ausführungsform der Erfindung. Ein Bierfass 2 wird durch eine direkte Verbindung mit einer CO₂- oder Stickstoff-Flasche 3 mit einem vordefinierten Betriebsdruck gespeist. Vorzugsweise ist zwischen dem Gasbehälter 3 und dem Bierfass 2 ein in Figur 1 nicht gezeigter Druckminderer angeordnet. An das Bierfass angeschlossen ist ein erster Leitungsabschnitt 4a einer Bierleitung 4, die Frischbierleitung 4a, die zu einem Ventil 5 führt. Von diesem Ventil 5 führt ein zweiter Leitungsabschnitt 4b der Bierleitung 4 zu einer Hopfenkammer 6, in der sich der Hopfen und ein durchströmbarer Hopfenfilter befindet. Ist das Ventil 5 geöffnet, kann das Bier durch die Frischbierleitung 4, das geöffnete Ventil 5 und den zweiten Leitungsabschnitt 4b der Bierleitung in die Hopfenkammer 6 strömen. Das Ventil 5 dient somit als eine erste Absperreinrichtung 5 für das Öffnen und Unterbrechen des Strömungsweges des Biers für den Aromatisierungsvorgang, die mit einem zweiten Ende des ersten Leistungsabschnitts 4a der Bierleitung 4 verbunden ist. In der Hopfenkammer 6 befindet sich ein mit einer auf die Menge einer oder mehrerer Genusseinheiten abgestimmten Menge an festem Aromaträger gefüllter und mit Bier durchströmbarer Behälter 7, der als auswechselbarer Einsatz 7 ausgebildet ist. Innerhalb der Hopfenkammer 6 löst der Alkohol während des Durchflusses des Biers durch den Behälter 7 die lipophilen Aromen aus dem Hopfen, der durch den Behälter 7, der zum Beispiel als auswechselbarer Hopfenfilter ausgebildet sein kann, zurückgehalten wird. Das kaltgehopfte Bier strömt weiter durch einen der Hopfenkammer 6 nachgeschalteten, dritten Leitungsabschnitt 4c der Bierleitung 4 zum Zapfhahn 8. Schließlich kann das kaltgehopfte Bier durch den Zapfhahn 8 und den anschließenden, vierten Leitungsabschnitt 4d der Bierleitung 4 in eine Vorlage 9 strömen. Die Vorlage 9 kann ein bereitstehendes Bierglas 9 oder ein anderes Gefäß sein.

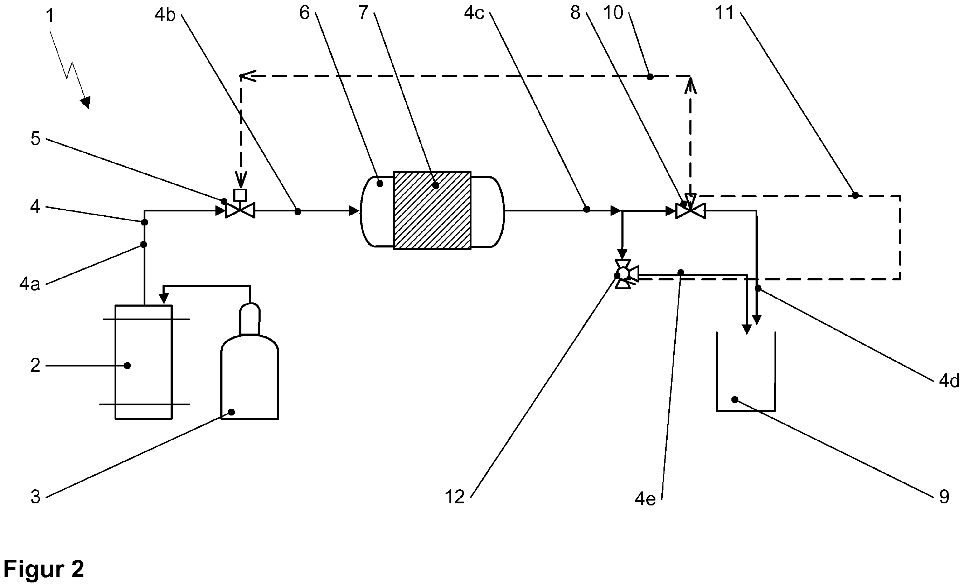

Die **Figur 2** zeigt eine schematische Darstellung einer Instream-Kalthopfungsvorrichtung in Form einer Bierzapfanlage 1 nach einer zweiten Ausführungsform der Erfindung. Auch in dieser Ausführungsform wird das Bierfass 2 durch eine direkte Verbindung mit der CO₂- oder Stickstoff-Flasche 3 mit einem vordefinierten Betriebsdruck gespeist. An das Bierfass angeschlossen ist die Frischbierleitung 4a, die zum Ventil 5 führt. Von diesem Ventil 5 führt der zweite Leitungsabschnitt 4b der Bierleitung 4 zur Hopfenkammer 6, in der sich der Hopfen und ein durchströmbarer Hopfenfilter als auswechselbarer Behälter 7 befindet. Ist das Ventil 5 geöffnet, kann das Bier durch die Frischbierleitung 4a, das geöffnete Ventil 5 und den zweiten Leitungsabschnitt 4b der Bierleitung in die Hopfenkammer 6 strömen. Innerhalb der Hopfenkammer 6 löst der Alkohol während des Durchflusses des Biers die lipophilen Aromen aus dem Hopfen, der durch den Hopfenfilter zurückgehalten wird. Das kaltgehopfte Bier strömt weiter durch den der Hopfenkammer 6 nachgeschalteten dritten Leitungsabschnitt 4c der Bierleitung 4 zum Zapfhahn 8. Schließlich kann das kaltgehopfte Bier durch den geöffneten Zapfhahn 8 und den anschließenden, vierten Leitungsabschnitt 4d der Bierleitung 4 in das Glas 9 strömen. Zwischen dem Zapfhahn 8 und dem Ventil 5 ist eine direkte Koppelung 10 vorgesehen. Die direkte Koppelung 10 zwischen Zapfhahn 8 und Ventil 5 sorgt dafür, dass sich das Ventil 5 öffnet, wenn der Zapfhahn 8 geöffnet ist. Wird der Zapfhahn 8 geschlossen, so wird auch das Ventil 5 geschlossen, ausgelöst durch einen ersten Impulsgeber, dessen Impuls über die Koppelung 10 zum Ventil 5 geleitet wird. Der weitere Bierfluss wird hierdurch gestoppt. Wird der Zapfhahn 8 geschlossen, öffnet sich, ausgelöst durch einen zweiten Impulsgeber, dessen Impuls über eine Koppelung 11 zwischen dem Zapfhahn und einem Entschäumungsventil 12 zum Entschäumungsventil 12 geleitet wird, das Entschäumungsventil 12. Somit kann das noch in der Bierleitung 4 stehende Bier durch einen fünften Leitungsabschnitt 4e der Bierleitung 4 in das Glas 9 abfließen.

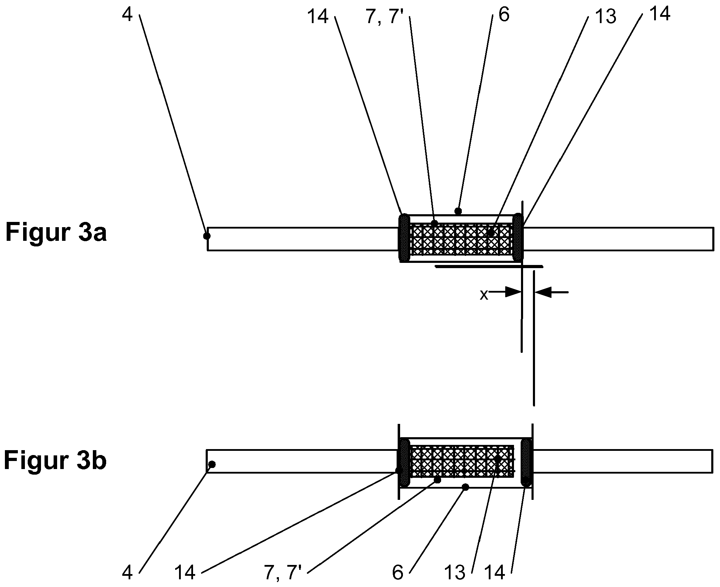

Die **Figur 3a** zeigt eine schematische Ansicht einer Hopfenkammer im Betriebszustand. Das Bier strömt entlang der Bierleitung 4 durch den eingesetzten Behälter 7, der in Form eines Hopfenröhrchens 7' ausgebildet ist, das sich in der Hopfenkammer 6 befindet. Dieses Hopfenöhrchen 7' ist mit Hopfen 13 befüllt und befindet sich durch Dichtungen 14 druckdicht in der Hopfenkammer 6.

Nach einem Zapfvorgang lässt sich die Hopfenkammer 6 entspannen und um ein Spaltmaß x öffnen. Diesen Vorgang zeigt die **Figur 3b** mit einer schematischen Ansicht einer Hopfenkammer 6 im geöffneten Zustand. Mindestens eine Dichtung 14 liegt dabei nicht mehr am Hopfenröhrchen an. Somit ist das Hopfenröhrchen 7' in der Hopfenkammer 6 nicht mehr befestigt und abgedichtet. Hierdurch lässt sich das alte Hopfenröhrchen 7' herausnehmen und ein neues Hopfenröhrchen einlegen.

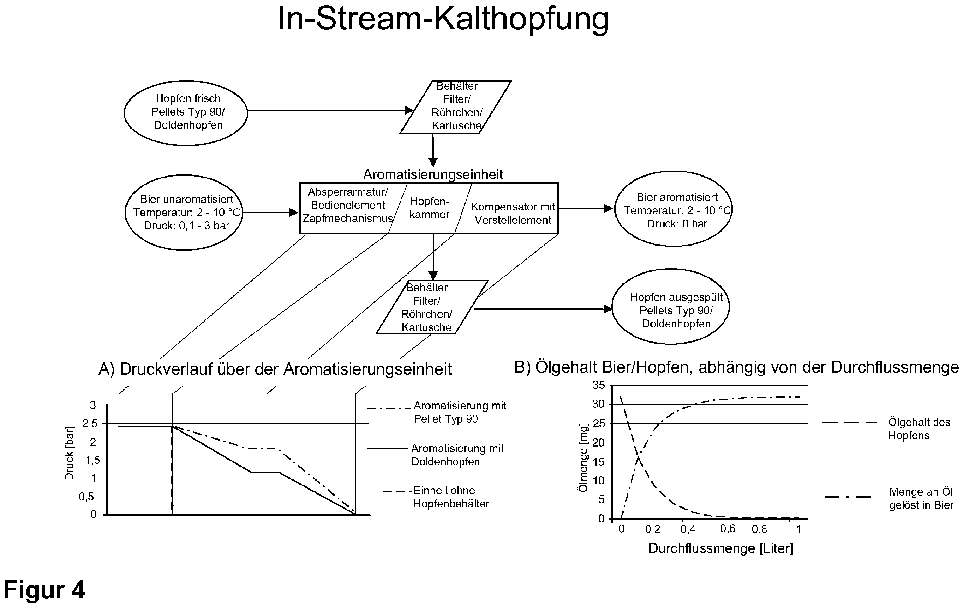

Die **Figur 4** zeigt den Verlauf eines In-Stream-Kalthopfungsverfahrens in Form eines Fließschemas. Dieses Fließschema stellt das Einbringen von Hopfen in Form von Pellets vom Typ 90 oder Doldenhopfen dar. Der Hopfen befindet sich in einem Behälter/ einem Filtergefäß/ einer Kartusche/ einem Röhrchen, der/die/das in die Hopfenkammer einer Aromatisierungseinheit einsetzbar ist. In der Aromatisierungseinheit wirkt der Behälter/das Filtergefäß/die Kartusche/das Hopfenröhrchen jeweils semipermeabel, das heißt durchlässig für das Bier und die aus dem Hopfen herausgelösten Öle, während der abgereicherte Hopfen zumindest zum überwiegenden Teil im Behälter/dem Filtergefäß/der Kartusche/dem Hopfenröhrchen zurückgehalten wird.

Der Hopfenkammer vorgeschaltet ist eine Absperrarmatur/ein Bedienelement/ ein Zapfmechanismus. Der Hopfenkammer nachgeschaltet ist ein Kompensator mit einem Verstellelement. Sowohl die vorgeschaltete Absperrarmatur/das Bedienelement/der Zapfmechanismus als auch der nachgeschaltete Kompensator sind neben der Hopfenkammer Teil der Aromatisierungseinheit.

Im Diagramm A) wird der Druckverlauf über der Aromatisierungseinheit während des Durchströmens der Aromatisierungseinheit mit Bier beschrieben. Das Bier steht beim Einritt in die Aromatisierungseinheit allgemein unter einem Druck von mindestens 0,1 bar, vorzugsweise 0,1 bis 3 bar. Im gezeigten Ausführungsbeispiel beträgt der Druck beim Eintritt in die Aromatisierungseinheit etwa 2,4 bar bei einer Temperatur zwischen 2 und 10 °C. Das Bier strömt durch die Hopfenkammer, in die ein Behälter/das Filtergefäß/die Kartusche/das Hopfenröhrchen mit dem Hopfen eingesetzt ist, wobei der Druck bis zum Austritt aus der Hopfenkammer absinkt, im gezeigten Ausführungsbeispiel bei den Pellets auf etwa 1,8 bar und im gezeigten Ausführungsbeispiel mit Doldenhopfen auf etwa 1,1 bar.

In Diagramm B) ist der Ölgehalt im Bier dem Ölgehalt im Hopfen, abhängig von der Durchflussmenge, gegenübergestellt. Bereits bei einer Durchflussmenge von 0,5 Liter ist der wesentliche Teil der Ölmenge aus dem Hopfen extrahiert und in das die Hopfenkammer durchströmende Bier übergegangen. Nach erfolgter Extraktion wird, wie die **Figur 4** zeigt, der Behälter/das Filtergefäß/die Kartusche/das Hopfenröhrchen mit den "ausgespülten" Pellets vom Typ 90 oder Doldenhopfen aus der Hopfenkammer entfernt.

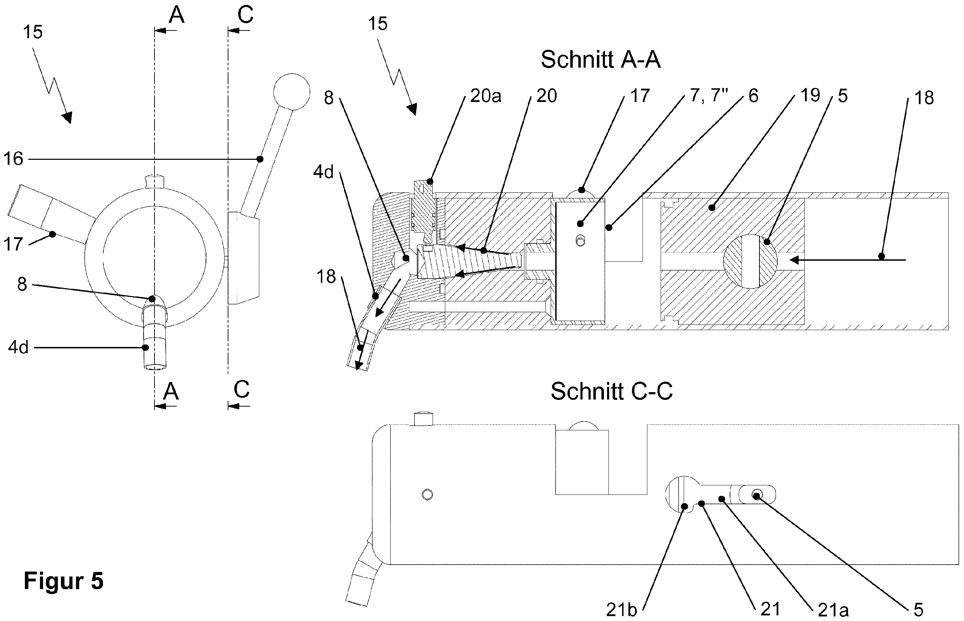

Die **Figur 5** zeigt eine beispielhafte Ausführungsform für eine Aromatisierungseinheit 15 in drei verschiedenen Ansichten und Schnittdarstellungen. Eine erste Darstellung zeigt eine Vorderansicht der im Wesentlichen zylindrischen Aromatisierungseinheit 15, wobei diese Vorderansicht senkrecht zu den zueinander parallelen Schnittebenen A und C orientiert ist, die in Form von teilweise gestrichelten Linien angezeigt sind.

Eine zweite Abbildung in **Figur 5** zeigt eine A-A-Schnittdarstellung der Aromatsierungseinheit 15, wobei die Schnittebene mitten durch die Bierleitung und die Hopfenkammer 6 verläuft.

Eine dritte Abbildung zeigt eine C-C-Schnittdarstellung, wobei die Schnittebene annähernd tangential zum zylindrischen Hauptteil zwischen diesem und einem Bedienelement 16 verläuft, wie zuvor in der linken Darstellung der A und C-Schnittebenen in Fig. 5 gezeigt..

Die Vorderansicht zeigt die Stirnseite des zylindrischen Hauptteils der Armomatisierungseinheit, von deren unterem Bereich ein Abschnitt 4d der Bierablaufleitung ausgeht, an dessen unterem Ende sich die Bierablauföffnung befindet. Am oberen Ende dieses Leitungsabschnitts 4d befindet sich ein Zapfhahn 8, der eine der Hopfenkammer 6 nachgeschaltete Absperreinrichtung bildet.

Wie die A-A-Schnittdarstellung in **Figur 5** zeigt, umfasst die Aromatisierungseinheit 15 eine Hopfenkammer 6 für die einsetzbaren und austauschbaren, mit Hopfen gefüllten Behälter 7, der in Figur 5 in Form eines eingesetzten Filtergefäßes 7" mit Griff 17 vorliegt. Des Weiteren umfasst die Aromatisierungseinheit 15 eine bezogen auf den Strömungsweg 18 des Biers vorgeschaltete Absperrarmatur als erste Absperreinrichtung 5, die durch das hebelartig ausgebildete Bedienelement 16 betätigbar ist. Die Absperrarmatur 5 befindet sich in einem Stempel 19, der ebenfalls durch das hebelartige Bedienelement 16 betätigbar ist. Durch eine Schiebebewegung des Bedienelements 16 wird der Stempel 19 entweder in Richtung der Hopfenkammer verschoben, um das eingesetzte Filtergefäß 7" in der Hopfenkammer 6 zu befestigen oder in entgegengesetzte Richtung verschoben, um die Befestigung des eingesetzten Filtergefäßes 7" zu lösen. Des Weiteren ist das Bedienelement 16 derart ausgebildet, dass durch eine Rotationsbewegung des Bedienelements 16 die Absperreinrichtung 5 wahlweise in Absperrstellung und Durchflussstellung gebracht werden kann. Vorteilhafterweise wird die Absperreinrichtung geöffnet, wenn der Behälter mit Hilfe des Stempels in der Hopfenkammer 6 fixiert und nach außen abgedichtet ist. In der C-C-Schnittdarstellung ist eine Führung 21 für das Bedienelement 16 im zylindrischen Mantel der Aromatisierungseinheit 15 zu erkennen, die sich in einen Langlochabschnitt 21a und einen Rundlochabschnitt 21b unterteilt. Diese Form der Führung ermöglicht einerseits die Verschiebebewegung zur Betätigung des Stempels 19 und andererseits die Rotationsbewegung des Bedienelements 16 zur Betätigung der Absperreinrichtung 5, wenn sich das Bedienelement mit der Absperreinrichtung 5 auf die Position des Rundlochabschnitts 21b verschoben ist. Letzteres ist der Fall, wenn sich der Stempel 19 in seiner vordersten Position befindet und der Behälter befestigt und nach außen abgedichtet ist.

Ist der Behälter 7 vor dem Einsatz geschlossen beziehungsweise besitzt er keine Einlass- und/oder Auslassöffnung, können durch Betätigung des Stempels 19 entsprechende Öffnungen in den Behälter eingestanzt werden, zum Beispiel, wenn der Behälter 7 mittels des Stempels 19 in die Hopfenkammer 6 eingepresst wird.

Der Hopfenkammer nachgeschaltet ist ein Kompensator 20 mit Kompensatorregler 20a zur Regelung des Drucks des Biers nach dem Verlassen der Hopfenkammer. Dem Kompensationsregler 20a nachgeschaltet ist der Zapfhahn 8, der als zweite Absperreinrichtung dient. Der Zapfhahn 8 umfasst dabei, wie die **Figur 5** zeigt, ein teilweise kegelförmiges Sperrelement, was mittels eines zu drückenden, zu drehenden oder zu kippenden Bedienelementes des Zapfhahns 8 derart verstellbar ist, dass der Strömungsweg 18 des Biers, der aus der Hopfenkammer 6 durch die Bierablaufleitung 4d in das Glas führt, gesperrt oder freigegeben werden kann.

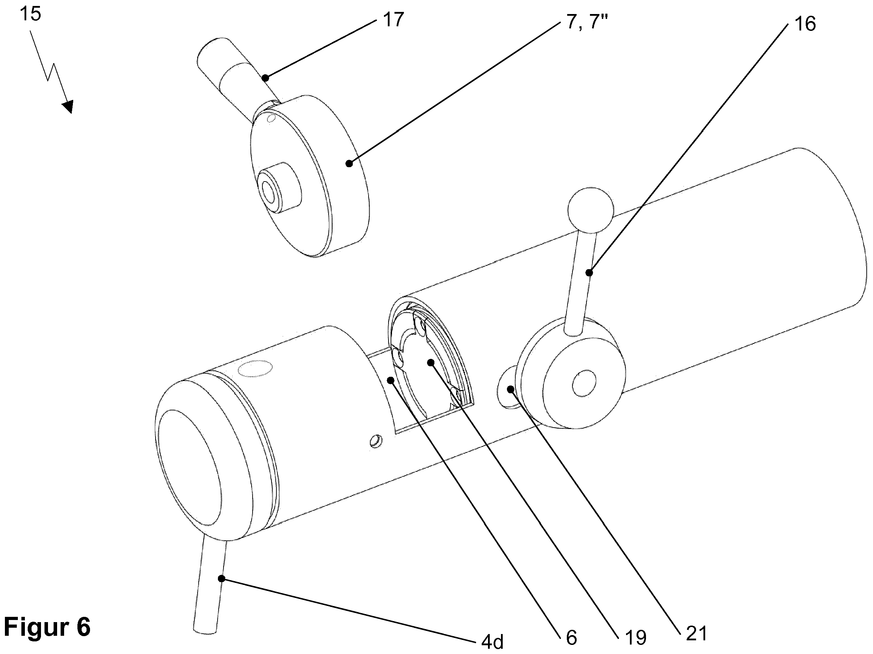

Die **Figur 6** zeigt eine perspektivische Darstellung der in Figur 5 gezeigten Aromatisierungseinheit 15 vor Einsatz des als Behälter 7 verwendeten zylinderförmigen Filtergefäßes 7" mit frischem Hopfen. Der an das zylinderförmige Filtergefäß 7" angebrachte Griff 17 dient der besseren Handhabung des Filtergefäßes 7" und ist senkrecht zur Zylinderachse des Filtergefäßes 7" ausgerichtet. Die Hopfenkammer 6 ist in diesem Stadium noch leer. Das hebelförmige Bedienelement 16 befindet sich noch in der hinteren Position seiner Führung 21 und ist nach oben ausgerichtet. Das heißt, auch der Stempel 19 befindet sich noch in seiner hinteren Position und die in Figur 6 nicht erkennbare Absperreinrichtung befindet sich noch in Absperrstellung.

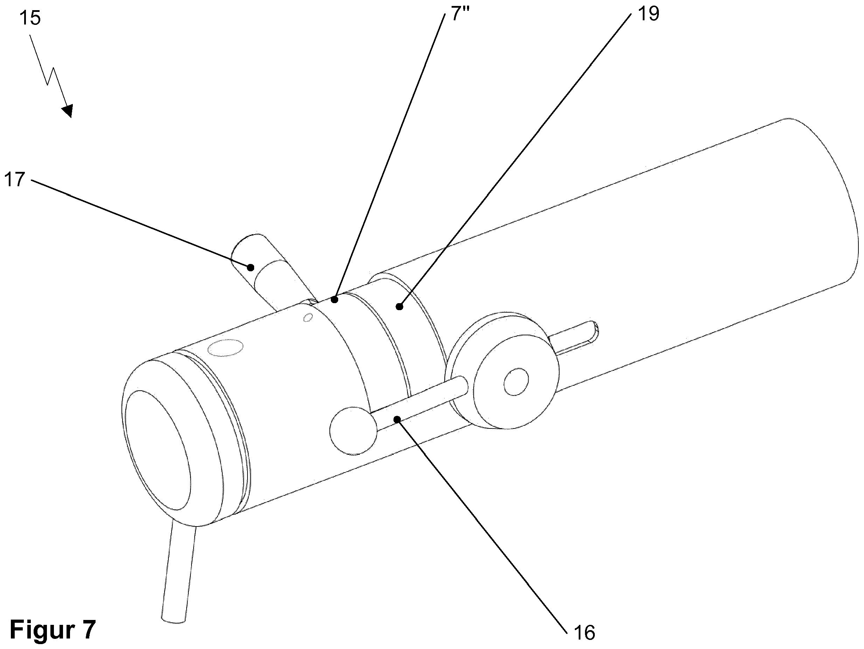

Die **Figur 7** zeigt eine perspektivische Darstellung der Aromatisierungseinheit mit in die Hopfenkammer eingesetztem Filtergefäß 7". Das hebelförmige Bedienelement 16 befindet sich in der vordersten Position seiner Führung. Somit ist auch der Stempel 19 nach vorne verschoben worden, was zwecks Befestigung des Filtergefäßes 7" in der Aromatisierungseinheit 15 erfolgte. Das Bedienelement ist in Folge einer Rotationsbewegung um 90° nunmehr parallel zur Längsachse der Aromatisierungseinheit 15 ausgerichtet. Infolge dessen hat die in Figur 7 nicht erkennbare Absperreinrichtung von der Absperrstellung in die Durchflussstellung gewechselt (vgl. Figur 5).

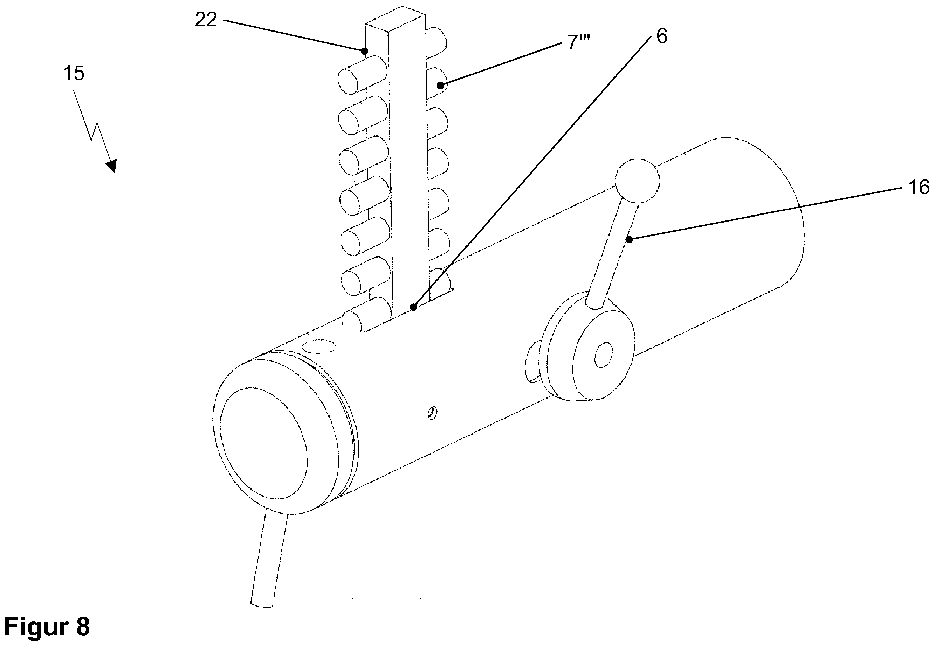

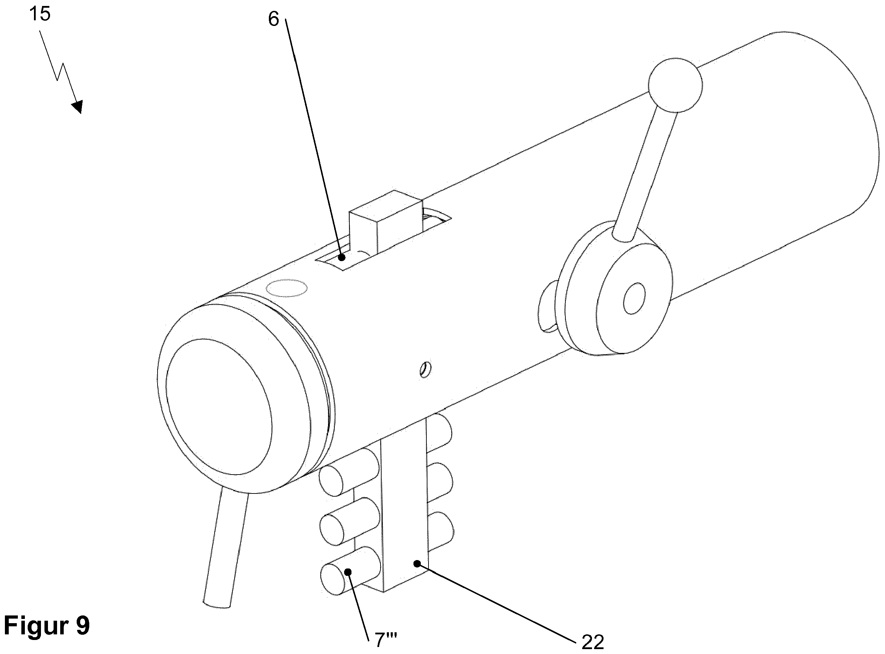

Die **Figur 8** zeigt eine perspektivische Darstellung einer Aromatisierungseinheit 15 gemäß einer weiteren Ausführungsform der Erfindung. Dabei wird ein Magazin 22, in dem eine Reihe von parallel beabstandeten Behältern 7, in diesem Falle Kapseln 7"', angeordnet sind, senkrecht zur Längsachse der Aromatisierungseinheit in die Hopfenkammer 6 zunächst eingeführt und im weiteren Verlauf durchgeführt, derart, dass jede einzelne Kapsel 7"' des Magazins zunächst in die für die Extraktion gewünschte Position gebracht werden kann und nach der Extraktion durch die Bewegung des Magazins 22 aus dieser Position entfernt und ausgetauscht werden kann. Die **Figur 9** zeigt die Aromatisierungseinheit 15, nachdem mehrere Kapseln 7"' des Magazins 22 verbraucht wurden. Das Magazin 22 wird dabei nach unten aus der Hopfenkammer 6 herausgeführt. Eine solche Ausführungsform kann auch als Hopfenrevolver bezeichnet werden.

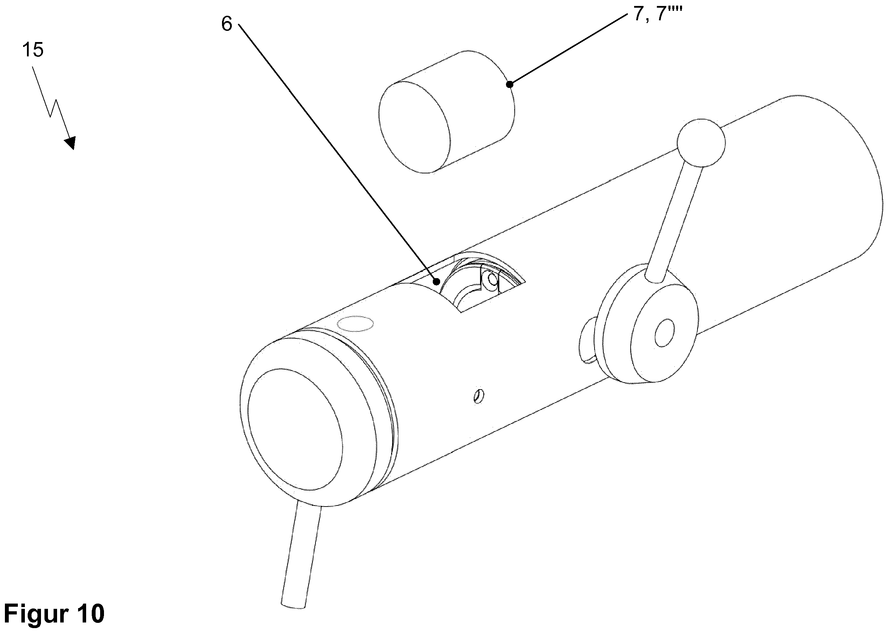

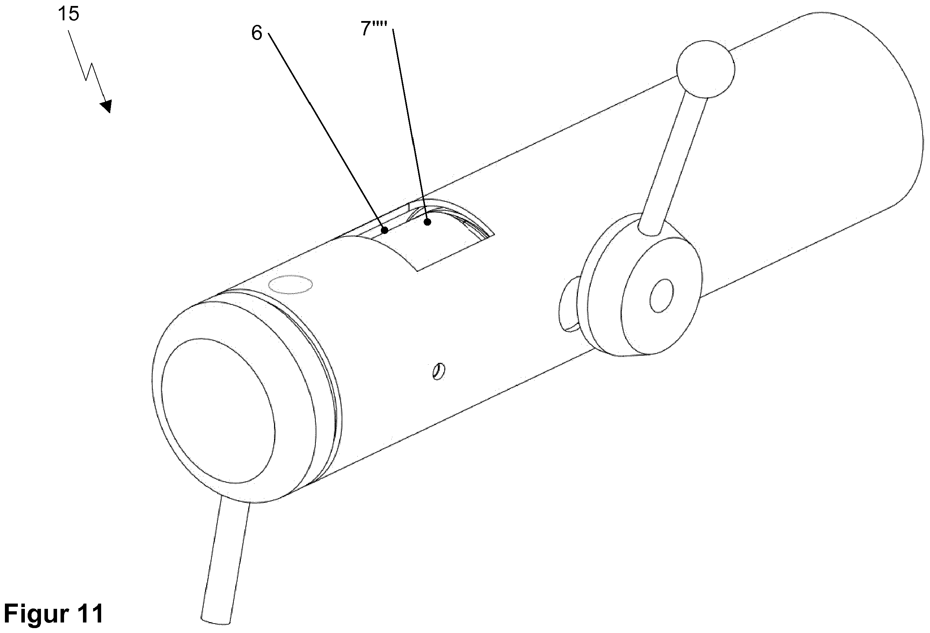

Die **Figur 10** zeigt eine perspektivische Darstellung der Aromatisierungseinheit 15 vor dem Einsetzen einer einzelnen Kartusche 7"" als Hopfen-Behälter 7 in die Hopfenkammer 6, während die **Figur 11** die entsprechende Aromatisierungseinheit mit eingesetzter Kartusche 7"" zeigt.

### Bezugszeichenliste

- 1: Bierzapfanlage
- 2: Bierfass
- 3: CO₂- oder Stickstoff-Flasche, Gasbehälter
- 4: Bierleitung
- 4a: erster Leitungsabschnitt der Bierleitung 4, Frischbierleitung
- 4b: zweiter Leitungsabschnitt der Bierleitung 4
- 4c: dritter Leitungsabschnitt der Bierleitung 4
- 4d: vierter Leitungsabschnitt der Bierleitung 4, Bierablaufleitung
- 4e: fünfter Leitungsabschnitt der Bierleitung 4
- 5: Ventil, erste Absperreinrichtung
- 6: Hopfenkammer
- 7: Behälter, auswechselbarer Einsatz
- 7': Hopfenröhrchen
- 7": Filtergefäß mit Hopfenfilter
- 7"': Kapsel
- 7"": Kartusche
- 8: Zapfhahn, zweite Absperreinrichtung
- 9: Glas, Vorlage
- 10: Koppelung zwischen dem Zapfhahn 8 und einem Ventil 5
- 11: Koppelung zwischen dem Zapfhahn 8 und einem Entschäumungsventil 12
- 12: Entschäumungsventil
- 13: Hopfen
- 14: Dichtung
- 15: Aromatisierungseinheit
- 16: Bedienelement
- 17: Griff des Filtergefäßes 7"
- 18: Strömungsweg des Biers
- 19: Stempel
- 20: Kompensator
- 20a: Kompensatorregler, Kompensationsregler
- 21: Führung
- 21a: Langlochabschnitt der Führung 21
- 21b: Rundlochabschnitt der Führung 21
- 22: Magazin
- x: Spaltmaß

## Patentansprüche

1. Verfahren zur reproduzierbaren Aromatisierung von einzelnen Genusseinheiten von Bier in einer Bierzapfanlage, bei dem
a) ein mit einer auf die Menge einer oder mehrerer Genusseinheiten abgestimmten Menge an festem Aromaträger gefüllter und mit Bier durchströmbarer Behälter in eine in der Bierzapfanlage integrierte, mit mindestens einem Bierzulauf und Bierablauf verbundene Hopfenkammer eingesetzt wird, wobei beim Einsetzen des Behälters der Bierzulauf in die Hopfenkammer gesperrt ist,
b) der eingesetzte Behälter in der Hopfenkammer derart befestigt und nach außen hin derart abgedichtet wird, dass ein Strömungsweg des Biers, der vom Bierzulauf durch den mit dem Aromaträger gefüllten Behälter in den Bierablauf führt, bereitgestellt wird, wobei der gefüllte Behälter vor dem Einsatz einen Einlass und einen Auslass für das Durchströmen enthält oder vor dem Einsatz vollständig geschlossen vorliegt und erst beim Einsatz und dem Abdichten des Behälters in der Hopfenkammer eine Einlassöffnung und eine Auslassöffnung erzeugt werden,
c) der Bierzulauf geöffnet wird, so dass über den Bierzulauf Bier mit einem Eingangsdruck von mindestens 0,1 bar in die Hopfenkammer und somit in den mit dem Aromaträger gefüllten Behälter strömt und durch Extraktion von lipophilen Aromastoffen aus dem festen Aromaträger aromatisiert wird,
d) in einem gleichzeitigen oder dem Schritt c) nachfolgendem Zapfvorgang der Bierablauf geöffnet wird, so dass das aromatisierte Bier aus der Hopfenkammer in den Bierablauf geleitet wird, während der extrahierte feste Aromaträger zumindest zum überwiegenden Teil im Behälter verbleibt,
e) nach Abschluss eines oder mehrerer Zapfvorgänge der Behälter aus der Hopfenkammer entfernt und die Schritte a bis d) wiederholt werden.

2. Verfahren nach Anspruch 1, **dadurch gekennzeichnet, dass** als fester Aromaträger Hopfenpellets aus gemahlenem und/oder gepresstem Hopfen und/oder Doldenhopfen und/oder Aromaträger mit aromaölhaltigen pflanzlichen Stoffen eingesetzt werden.

3. Verfahren nach Anspruch 1 oder 2, **dadurch gekennzeichnet, dass** der mit festem Aromaträger gefüllte Behälter ein Röhrchen mit Sieb, eine Kapsel, eine Kartusche oder ein Filtergefäß mit Hopfenfilter ist.

4. Verfahren nach einem der Ansprüche 1 bis 3, **dadurch gekennzeichnet, dass** der Druck, mit dem das unaromatisierte Bier in die Hopfenkammer eintritt, auf einen Wert von 0,1 bis 10 bar geregelt wird.

5. Verfahren nach Anspruch 4, **dadurch gekennzeichnet, dass** der Druck, mit dem das unaromatisierte Bier in die Hopfenkammer eintritt, auf einen Wert von 2 bis 7 bar, vorzugsweise von 2 bis 4 bar, geregelt wird.

6. Verfahren nach einem der Ansprüche 1 bis 5, **dadurch gekennzeichnet, dass** die Temperatur des unaromatisierten Biers, das in die Hopfenkammer eintritt, einen Wert von 0 bis 20 °C, vorzugsweise von 1 bis 10 °C, aufweist.

7. Verfahren nach einem der Ansprüche 1 bis 6, **dadurch gekennzeichnet, dass** die Menge an Aromaträger in einem eingesetzten Behälter für eine Genusseinheit von einem 0,1 bis 3 Liter Bier, vorzugsweise 0,5 Liter, vorgesehen ist.

8. Vorrichtung für die Durchführung eines Verfahrens zur reproduzierbaren Aromatisierung von einzelnen Genusseinheiten von Bier nach einem der Ansprüche 1 bis 7, umfassend
▪ eine erste Absperreinrichtung für das Öffnen und Unterbrechen des Strömungsweges (18) des Biers aus einem ersten Leitungsabschnitt (4a) einer Bierleitung (4),
• eine durchströmbare Hopfenkammer (6), die über einen Bierzulauf mit der Absperreinrichtung verbunden ist und eine Austrittsöffnung aufweist, die zu einer Bierablaufleitung (4d) führt,
• eine zweite Absperreinrichtung (8) für das Öffnen und Unterbrechen des Strömungsweges (18) des Biers durch die Bierablaufleitung (4d),
• mindestens einen mit einer auf die Menge einer oder mehrerer Genusseinheiten abgestimmten Menge an festem Aromaträger befüllbaren, mit Bier durchströmbaren und den festen Aromaträger dabei gleichzeitig zumindest zum überwiegenden Teil zurückhaltenden Behälter (7), der in die Hopfenkammer (6) derart einsetzbar und nach außen hin abdichtbar ist, dass der Strömungsweg (18) des Biers beim Aromatisierungsvorgang durch den Behälter (7) und beim Zapfvorgang aus dem Behälter (7) in die Bierablaufleitung (4d) führt, wobei der Behälter derart ausgebildet ist, dass er vor dem Einsatz einen Einlass und einen Auslass für das Durchströmen enthält oder vor dem Einsatz vollständig geschlossen vorliegt und erst beim Einsatz und dem Abdichten des Behälters in der Hopfenkammer eine Einlassöffnung und eine Auslassöffnung erzeugt werden.

9. Vorrichtung nach Anspruch 8, **dadurch gekennzeichnet, dass** die erste Absperreinrichtung (5) einen Zapfhahnmechanismus enthält.

10. Vorrichtung nach Anspruch 8 oder 9, **dadurch gekennzeichnet, dass** die erste Absperreinrichtung (5), die Hopfenkammer (6) und ein der Hopfenkammer (6) bezüglich des Strömungsweges (18) des Biers nachgeschalteter Kompensator (20) zur Regelung des Drucks des Biers nach dem Verlassen der Hopfenkammer (6), sowie ein dem Kompensator (20) nachgeschalteter Zapfhahn (8) entweder als einzelne Bauteile oder zusammen in einer Aromatisierungseinheit (15) angeordnet sind.

11. Vorrichtung nach einem der Ansprüche 8 bis 10, **dadurch gekennzeichnet, dass** die erste Absperreinrichtung (5) ein bezüglich des Strömungsweges (18) des Biers der Hopfenkammer (6) vorgeschaltetes Ventil (5) ist, und ein Zapfhahn (8) der Hopfenkammer (6) als zweite Absperreinrichtung nachgeschaltet, das heißt, zwischen der Hopfenkammer (6) und einer Bierablauföffnung angeordnet ist.

12. Vorrichtung nach Anspruch 11, **dadurch gekennzeichnet, dass** eine direkte Koppelung (10) zwischen Zapfhahn (8) und Ventil (5) ausgebildet ist, die dafür sorgt, dass sich das Ventil (5) öffnet, wenn der Zapfhahn (8) geöffnet ist.

13. Vorrichtung nach einem der Ansprüche 8 bis 12, **dadurch gekennzeichnet, dass** die Vorrichtung derart ausgebildet ist, dass sie anstelle eines Zapfhahns von bestehenden Bierzapfanlagen in die Bierzapfanlagen einsetzbar ist.

14. Bierzapfanlage (1), die einen Strömungsweg (18) des Biers von einem Bierfass (2) bis zu einer Bierablauföffnung bereitstellt, umfassend eine Vorrichtung nach einem der Ansprüche 8 bis 13 sowie
a) eine erste Einheit zum Anschließen und Kühlen eines Bierfasses (2),
b) einen ersten Leitungsabschnitt (4a) einer Bierleitung (4), der an einem ersten Ende mit einem Bierfass (2) verbindbar ausgebildet ist,
c) eine Speichereinheit zur Aufnahme eines mit dem Bierfass (2) verbindbaren Gasbehälters (3) für die Herstellung eines Betriebsdrucks der Bierzapfanlage (1).

## Claims

1. Method for the reproducible aromatisation of individual consumption units of beer in a beer dispensing apparatus, whereby
a) a container which is filled with a quantity of solid aroma source matched to the quantity of one or more beer consumption units, and through which beer can flow, is inserted into a hop chamber integrated in the beer dispensing apparatus that is connected to at least one beer inlet and outlet, whereby the beer inlet into the hop chamber is closed when the container is inserted,
b) the container used is fixed in the hop chamber and sealed off from the outside in such a way that a flow path for the beer is created which leads from the beer inlet through the container filled with the aroma source into the beer outlet, whereby the filled container contains an inlet and an outlet for flow-through before insertion or is completely closed before insertion, and an inlet opening and an outlet opening are only created upon insertion and sealing of the container in the hop chamber,
c) the beer inlet is opened so that beer with an inlet pressure of at least 0.1 bar flows into the hop chamber via the beer inlet and thus into the container filled with the aroma source and is aromatised by extraction of lipophilic aroma substances from the solid aroma source,
d) in a simultaneous or subsequent tapping operation to step c), the beer outlet is opened so that the aromatised beer passes from the hop chamber into the beer outlet, while extracted solid aroma source remains in predominant part in the container,
e) after completion of one or more tapping operations, the container is removed from the hop chamber and steps a to d) are repeated.

2. Process according to claim 1, **characterised in that** hop pellets of ground and/or pressed hops and/or cone hops and/or aroma sources containing vegetable substances containing aromatic oil are used as the solid aroma source.

3. A method according to claim 1 or 2, **characterised in that** the container filled with a solid aroma source is a tube with a sieve, a capsule, a cartridge or a filter vessel with a hop filter.

4. A method according to one of claims 1 to 3, **characterised in that** the pressure at which the non-aromatised beer enters the hop chamber is regulated to a value of 0.1 to 10 bar.

5. A method according to claim 4, **characterised in that** the pressure at which the non-aromatised beer enters the hop chamber is regulated to a value of 2 to 7 bar, preferably 2 to 4 bar.

6. A method according to one of claims 1 to 5, **characterised in that** the temperature at which the non-aromatised beer enters the hop chamber is regulated to a value 0 to 20 °C, preferably 1 to 10 °C.

7. A method according to one of claims 1 to 6, **characterised in that** the amount of the aroma source in an inserted container is intended for a consumption unit of 0.1 to 3 litres of beer, preferably 0.5 litres.

8. Device for executing the method for the reproducible aromatisation of individual consumption units of beer according to one of claims 1 to 7, comprising
• a first stop valve for opening and interrupting the flow path (18) of the beer from a first line section (4a) of a beer line (4),
• a hop chamber (6) that permits flow-through which is connected to the stop valve via a beer inlet and has an outlet opening which leads to a beer outflow line (4d),
• a second stop valve (8) for opening and interrupting the flow path (18) of the beer through the beer outflow line (4d),
• at least one container (7) which can be filled with a quantity of solid aroma source matched to the quantity of one or more consumption units, through which beer can flow and which simultaneously retains the solid aroma source at least in predominant part, and which can be inserted into the hop chamber (6) and sealed outwards in such a way that the flow path (18) of the beer leads through the container (7) during the aromatisation process and out of the container (7) into the beer outflow line (4d) during the tapping process, the container is designed such that the container contains an inlet and an outlet for flow-through before insertion or is completely closed before insertion, and an inlet opening and an outlet opening are only created upon insertion and sealing of the container in the hop chamber.

9. Device according to claim 8, **characterised in that** the first stop valve (5) contains a tap mechanism.

10. Device according to claim 8 or 9, **characterised in that** the first stop valve (5), the hop chamber (6) and a compensator (20) connected downstream of the hop chamber (6) in relation to the flow path (18) of the beer for purposes of regulating the pressure of the beer after leaving the hop chamber (6), as well as a tap (8) connected downstream of the compensator (20) are arranged as individual components or together as an aromatisation unit (15).

11. Device according to one of claims 8 to 10, **characterised in that** the first stop valve (5) is a valve (5) connected upstream of the hop chamber (6) with respect to the flow path (18) of the beer, and a tap (8) is connected downstream of the hop chamber (6) as a second stop valve, i.e. arranged between the hop chamber (6) and a beer outlet opening.

12. A device according to claim 11, **characterised in that** a direct coupling (10) is placed between the tap (8) and the valve (5) that ensures that the valve (5) opens when the tap (8) is opened.

13. Device according to one of claims 8 to 12, **characterised in that** the device is designed in such a way that it can be inserted into a beer dispensing apparatus in lieu of the tap in an existing beer dispensing apparatus.

14. Beer dispensing apparatus (1) providing a flow path (18) of beer from a beer keg (2) to a beer outlet opening, comprising a device according to one of claims 8 to 13, and
a) a first unit for connecting and cooling a beer keg (2),
b) a first line section (4a) of a beer line (4), which is designed to be connected to a beer keg (2) at a first end,
c) a storage space for receiving a gas bottle (3), which can be connected to the beer keg (2), for producing operating pressure for the beer dispensing apparatus (1).

## Revendications

1. Procédé d'aromatisation reproductible de différentes unités de bière dans un appareil distributeur de bière, selon lequel
a) un conteneur rempli d'une quantité de support aromatique solide adaptée au nombre d'unités de bière et pouvant être traversé par de la bière est inséré dans une chambre à houblon intégrée dans l'appareil distributeur de bière avec au moins une entrée et une sortie pour la bière, la sortie de la bière étant bloquée lors de l'insertion du conteneur dans la chambre à houblon,
b) le conteneur inséré dans la chambre à houblon est fixé et scellé de l'extérieur de manière à générer un trajet d'écoulement de la bière de l'entrée jusqu'à la sortie en passant par le conteneur rempli de support aromatique et préalablement doté d'une entrée et d'une sortie pour l'écoulement, ou bien totalement clos et dans lequel sont pratiquées, lors de l'insertion et du scellement dans la chambre à houblon, une ouverture d'entrée et une ouverture de sortie,
c) l'entrée s'ouvre de manière à ce que la bière pénètre dans la chambre à houblon avec une pression minimale de 0,1 bar et traverse ainsi le conteneur rempli de support aromatique, où elle est aromatisée par extraction de substances aromatiques lipophiles du support aromatique solide,
d) lors d'un tirage simultané ou consécutif à l'étape c), la sortie s'ouvre de manière à diriger la bière aromatisée issue de la chambre à houblon vers la sortie tandis que le support aromatique solide extrait reste, du moins pour l'essentiel, dans le conteneur,
e) après un ou plusieurs tirages, le conteneur est extrait de la chambre à houblon et les étapes a) à d) sont répétées.

2. Procédé selon la revendication 1, **caractérisé en ce que** des granulés de houblon constitués de houblon broyé et/ou pressé et/ou d'ombelles de houblon et/ou de supports aromatiques composés de substances végétales contenant des huiles essentielles sont utilisés comme supports aromatiques solides.

3. Procédé selon la revendication 1 ou 2, **caractérisé en ce que** le conteneur rempli de support aromatique est un tube muni d'un tamis, une capsule, une cartouche ou une cuve avec filtre à houblon.

4. Procédé selon l'une des revendications 1 à 3, **caractérisé en ce que** la pression à laquelle la bière non aromatisée pénètre dans la chambre à houblon est réglée sur une valeur comprise entre 0,1 et 10 bar.

5. Procédé selon l'une des revendications 1 à 4, **caractérisé en ce que** la pression à laquelle la bière non aromatisée pénètre dans la chambre à houblon est réglée sur une valeur comprise entre 2 et 7 bar, de préférence entre 2 et 4 bar.

6. Procédé selon l'une des revendications 1 à 5, **caractérisé en ce que** la température de la bière non aromatisée qui pénètre dans la chambre à houblon est comprise entre 0 et 20 °C, de préférence entre 1 et 10 °C.

7. Procédé selon l'une des revendications 1 à 6, **caractérisé en ce que** la quantité de support aromatique dans un conteneur utilisé pour une unité de bière est prévue pour 0,1 à 3 litres de bière, de préférence 0,5 litre.

8. Dispositif pour l'exécution d'un procédé d'aromatisation reproductible de différentes unités de bière selon l'une des revendications 1 à 7, comprenant
• un dispositif de blocage pour l'ouverture et l'interruption du flux d'écoulement (18) de la bière issue d'une première section (4a) de conduite de bière (4),
• une chambre à houblon traversable (6), liée au dispositif de blocage via une entrée et présentant une ouverture de sortie conduisant à une conduite de sortie de bière (4d),
• un deuxième dispositif de blocage (8) pour l'ouverture et l'interruption du flux d'écoulement (18) de la bière à travers la conduite de sortie de bière (4d),
• au moins un conteneur (7) pouvant être rempli d'une quantité de support aromatique solide adaptée à la quantité d'unités de bière, traversable par un flux de bière et conservant simultanément, du moins pour l'essentiel, le support aromatique solide, inséré et scellé dans la chambre à houblon (6) de telle manière que le trajet d'écoulement
(18) de la bière lors de l'aromatisation à travers le conteneur (7) et lors du tirage hors du conteneur (7) mène à la conduite de sortie de bière (4d), **caractérisé en ce que** le conteneur est préalablement conçu avec une entrée et une sortie pour l'écoulement ou bien entièrement fermé, avec des ouvertures d'entrée et de sortie pratiquées lors de l'insertion et du scellement du conteneur dans la chambre à houblon.

9. Dispositif selon la revendication 8, **caractérisé en ce que** le premier dispositif de blocage (5) contient un mécanisme de robinet.

10. Dispositif selon la revendication 8 ou 9, **caractérisé en ce que** le premier dispositif de blocage (5), la chambre à houblon (6) et un compensateur (20) en aval de la chambre à houblon (6) par rapport au flux d'écoulement (18) de la bière,
afin de réguler la pression de la bière à la sortie de la chambre à houblon (6), ainsi qu'un robinet (8) en aval du compensateur (20) sont prévus en tant que composants individuels ou intégrés dans une unité d'aromatisation (15).

11. Dispositif selon l'une des revendications 8 à 10, **caractérisé en ce que** le dispositif de blocage (5) est une vanne (5) en amont de la chambre à houblon (6) par rapport au flux d'écoulement (18) de la bière et **en ce que** le robinet (8) de la chambre à houblon (6) constitue un deuxième dispositif de blocage, c'est-à-dire qu'il est disposé entre la chambre à houblon (6) et une ouverture de sortie de la bière.

12. Dispositif selon la revendication 11, **caractérisé en ce que** un accouplement direct (10) entre le robinet (8) et la vanne (5) est prévu et permet l'ouverture de la vanne (5) lorsque le robinet (8) est ouvert.

13. Dispositif selon l'une des revendications 8 à 12, **caractérisé en ce que** le dispositif est conçu de manière à pouvoir remplacer le robinet d'un appareil de distribution de bière existant.

14. Appareil de distribution de bière (1) générant un flux d'écoulement (18) de la bière depuis un fût de bière (2) jusqu'à une ouverture de sortie, comprenant un dispositif selon l'une des revendications 8 à 13 ainsi que
a) une première unité pour le raccordement et le refroidissement d'un fût de bière (2),
b) une première section (4a) de conduite de bière (4) dont la première extrémité peut être raccordée à un fût de bière (2),
c) une unité de stockage pour accueillir un conteneur de gaz (3) pouvant être raccordé au fût de bière (2) afin de générer la pression de fonctionnement de l'appareil de distribution de bière (1).
